Europäisches Patentamt

European Patent Office

Office européen des brevets

(18)

(11) Publication number: **0 032 794**
**B1**

(12) # EUROPEAN PATENT SPECIFICATION

(45) Date of publication of patent specification: **23.04.86**

(51) Int. Cl.⁴: **G 06 K 7/10**

(21) Application number: **81300086.6**

(22) Date of filing: **09.01.81**

(54) **An information readout device.**

(30) Priority: **11.01.80 JP 1886/80**

(43) Date of publication of application:
**29.07.81 Bulletin 81/30**

(45) Publication of the grant of the patent:
**23.04.86 Bulletin 86/17**

(84) Designated Contracting States:
**DE FR GB IT NL**

(56) References cited:
**DE-A-2 838 243**
**FR-A-2 314 540**
**US-A-3 636 317**
**US-A-3 643 068**
**US-A-3 748 483**
**US-A-3 823 326**
**US-A-3 889 102**
**US-A-3 902 048**

(73) Proprietor: **FUJITSU LIMITED**
**1015, Kamikodanaka Nakahara-ku**
**Kawasaki-shi Kanagawa 211 (JP)**

(72) Inventor: **Ikeda, Hiroyuki**
**1-12-1208, Wakabadai Asahi-ku**
**Yokohama-shi Kanagawa 241 (JP)**
Inventor: **Matsumoto, Seikichi**
**314, Wakamatsu-cho**
**Sano-shi Tochigi, 327 (JP)**
Inventor: **Kitagawa, Shunji**
**2-711, Maruko-dori Nakahara-ku**
**Kawasaki-shi Kanagawa, 211 (JP)**
Inventor: **Inagaki, Takefumi**
**1341-75, Ozenji Tama-ku**
**Kawasaki-shi Kanagawa 215 (JP)**
Inventor: **Sebata, Ichiro**
**3796-1-156, Ikuta Tama-ku**
**Kawasaki-shi Kanagawa, 214 (JP)**

(74) Representative: **Sunderland, James Harry et al**
**HASELTINE LAKE & CO Hazlitt House 28**
**Southampton Buildings Chancery Lane**
**London WC2A 1AT (GB)**

EP 0 032 794 B1

Courier Press, Leamington Spa, England.

## Description

The present invention relates to an information read-out device.

Existing bar-code-information readout devices can, roughly speaking, be classified into two types: a light-pen type and a stationary scanner type. Devices of the former type have a disadvantage in that scanning speed may fluctuate and a (pen) point may be floated (over a bar-code), reducing information read-out efficiency, because an operator should move the pen on a bar-code symbol. Moreover, devices of the latter type have a disadvantage in that device structure is complicated, increasing costs, the physical dimensions are large for the stationary type and an operator has less degrees of freedom in operation.

However, another information readout device, which can be carried easily and which can offer improved information readout efficiency, generally called a hand scanner, has been proposed. This device is light-weight and is capable of processing bar-code-information on products and moreover has a high information reading ratio provided through the use of high speed scanning using a laser beam. Details of such a device are explained in Laid-Open Japanese Patent Publications Nos. 52—148146 and 53—66330.

Such a device uses a mirror which generates vibrations or oscillations of the laser beam scanning system.

Such a device has suffered disadvantages in that the structure is complicated, mechanical vibration and noise are relatively high, energy efficiency is bad, and high speed scanning is restricted because mirror size is limited because of inertia considerations. In addition, such a device is accompanied by a disadvantage in that there is no possibility of omnidirectional reading as between a readout information area (hereinafter called a bar-code-symbol for simplification) and the device, because only one scanning line is used and scanning is effected only in a single direction and an operator is always worried about directional matching.

US—A—3902 048, FR—A—2 314 540 and DE—A—2 838 243 disclose information readout devices each providing an optical scanner operable to output a scanning output beam for reading information, for example presented in a bar-code format, from an information readout area, having an optical beam source, means operable to deflect the optical beam from the beam source to provide the scanning output beam, and a detector input for receiving light of the scanning output beam reflected from the information readout area. The device of US—A—3 902 048 is a stationary type scanner using mirrors to deflect the optical beam from the beam source, which mirrors also reflect light of the scanning output beam reflected from the readout area towards the detector input. This stationary type scanner is of a structure, design and size entirely unsuitable for holding in the hand of an operator, and is not comparable with an information readout device which is hand held.

DE—A—2 838 243 discloses that a housing, having a grip, accommodates the beam source, the scanning means, and the detector input.

According to the present invention there is provided a hand-held information readout device, having an optical scanner operable to output a scanning output beam for reading information, for example presented in a bar-code format, from an information readout area where readout information is recorded, comprising an optical beam source, deflector means operable to deflect the optical beam from the beam source to provide the scanning output beam, a detector input for receiving light of the scanning output beam reflected from the information readout area, and having a housing accommodating the beam source, the scanning means and the detector input, and having a hand grip, characterised in that the deflector means are operable not only to deflect but also to transmit the optical beam from the beam source to provide the scanning output beam and are operable also to transmit and to converge the output beam reflected from the information readout area, for focussing for receipt by the detector input

An embodiment of this invention can provide a beam scanning type information readout device which can read information for example given on a product and expressed in a bar-code format, omnidirectionally, by means of a beam scanner which can be carried in the hand.

An embodiment of the present invention can provide an information readout device of simple structure and of low cost, which are the advantages previously associated with light pens, and excellent readout efficiency and operationability, which are the advantages previously associated with stationary type information readout devices.

An embodiment of the present invention can provide an information readout device which is of simple structure, suffers the least or little mechanical vibration and resultingly has substantially no mechanical noise problems and which has a long operational life requiring only simple maintenance.

An embodiment of the present invention provides an information readout device which comprises an optical generator, an optical scanner which deflects and scans an optical beam from the generator in plural and/or to plural directions, an optical detector which detects an optical beam reflected from an information readout area (e.g. a bar-code symbol) and a case which accommodates the above parts and forms a grip portion. This embodiment can provide a low cost information readout device of simple structure.

In addition, an embodiment of the present invention can provide a very compact optical scanning type information readout device which provides a high information readout efficiency, as with the existing stationary type information readout device, even though the embodiment is of simple structure and low cost.

Reference is made, by way of example, to the accompanying drawings, in which:—

Figure 1 is a schematic diagram of an information readout device embodying the present invention;

Figure 2 is a schematic partly cut-away perspective view of an information readout device embodying the present invention;

Figure 3 is a schematic diagram for assistance in explaining a means of generating a hologram as employed in the embodiment of Figure 2;

Figure 4, (a) to (e) illustrate respective modifications of the optical system of Figure 2;

Figures 5 to 9 are schematic partly cut-away perspective views of respective further information readout devices embodying the present invention;

Figure 10 is a schematic perspective diagram illustrating a form of light absorption structure alternative to that shown in Figure 8;

Figures 11 to 13 are schematic perspective diagrams of parts of respective further embodiments of the present invention;

Figure 14 is a diagram for assistance in explanation of positional relationships between a scanning pattern and bar code symbols;

Figure 15 is a schematic perspective view of parts of another embodiment of the present invention;

Figure 16 is a diagram illustrating a scanning pattern provided by the embodiment of Figure 15;

Figure 17 is a schematic side view of the embodiment of Figure 15;

Figure 18 is a schematic perspective view of parts of a further embodiment of the present invention;

Figure 19 is a schematic diagram illustrating a scanning pattern provided by the embodiment of Figure 18;

Figure 20 is a diagram for assistance in explanation of means of generating a hologram as employed in the embodiment illustrated in Figure 18;

Figure 21, (a) to (d) illustrate respective modifications of the optical system shown in Figure 18;

Figure 22 is a diagram for assistance in explanation of another means of generating a hologram as employed in the embodiment shown in Figure 18;

Figure 23 illustrates one example of an optical system employing the hologram shown in Figure 22 as applied in an embodiment of this invention;

Figure 24, (a) and (b) are diagrams for assistance in explanation of another means of generating a hologram to be used in the embodiment of Figure 18;

Figure 25 illustrates an example of an optical system employing the hologram shown in Figure 24 as applied in an embodiment of this invention;

Figures 26(a) and 26(b) illustrate, in generally sectional side view and end view, respectively, a practical example of a device according to the embodiment of the present invention shown in Figure 15; and

Figure 27 is a schematic perspective view of parts of another information readout device embodying the present invention.

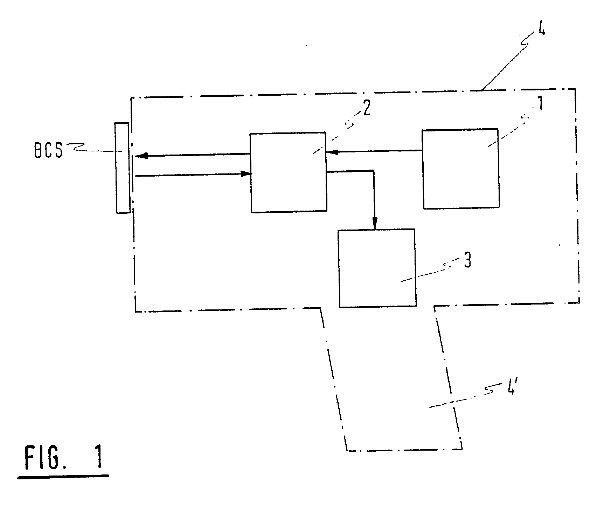

Figure 1 is a schematic diagram illustrating conceptually an information readout device embodying the present invention. In Figure 1, 1 is an optical generator consisting of a laser generator; 2 is an optical scanner; 3 is an optical detector; 4 is a device case; and 4' is a grip portion of the device case. In addition, BCS is a bar-code-symbol as applied to a product for example. In the information readout device embodying the present invention illustrated in Figure 1, the optical generator 1, optical scanner 2, and optical detector 3 are accommodated in the case 4 on a functional basis and thereby an operator can easily carry the device in the hand simply by holding it with a hand at the grip portion 4'.

An operator can obtain contact between an optical projection window of the information readout device and a bar-code symbol BCS on a product in an open-space for carrying the products individually, for example, by holding the relevant information readout device in the right hand and the product in the left hand. As a result, working efficiency for information readout can be improved.

The optical scanner 2 employed in the embodiment of the present invention has the function of deflecting and scanning a beam generated from the laser generator at least to two different areas or at least in two different directions, for enabling the bar-code symbol BCS to be read, by means of a hologram or an optical lens or other optical arrangement etc. Thereby information readout efficiency is greatly improved as compared with the existing type of device where one scanning laser beam is scanned in only one direction.

Moreover, the load on an operator is significantly alleviated because information can be read correctly merely by bringing the beam projecting window to an area where a bar-code symbol BCS is attached, without the need to pay conscious regard to orientation of the bar-code symbol BCS.

Practical structural examples of optical scanner 2 as shown in Figure 1 will be explained later, but it should be noted that in embodiments of this invention, in general, the optical scanning system (for deflecting and scanning the beam to at least two different areas or in two different directions in this invention) is simplified and reduced in size as compared with the existing type of device using one scanning laser beam scanned in only one direction.

Hereinafter, a variety of embodiments of this invention utilizing coherent laser generators as optical generators will be explained.

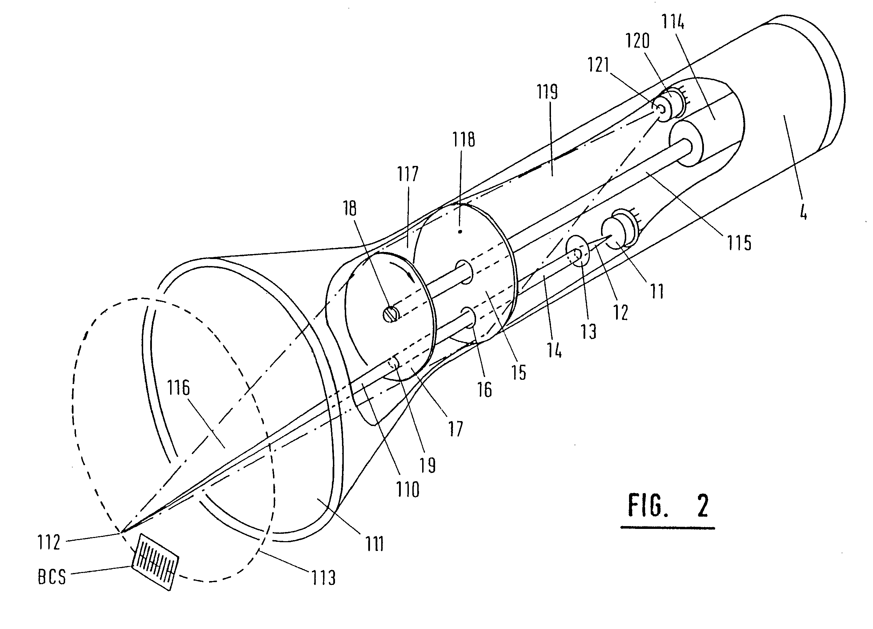

Figure 2 shows an information readout device embodying the present invention.

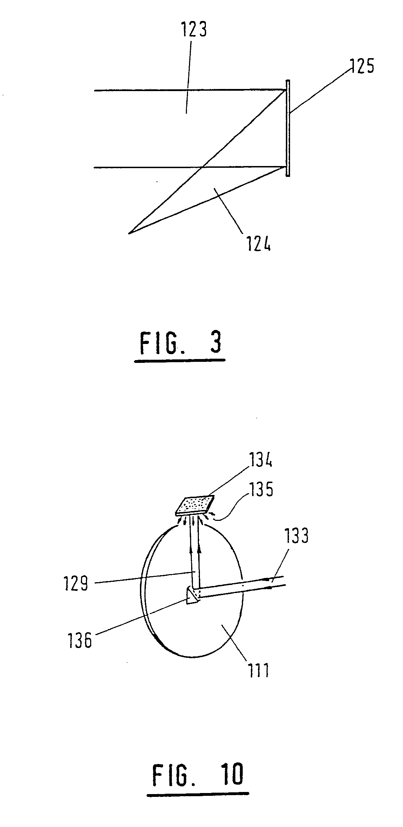

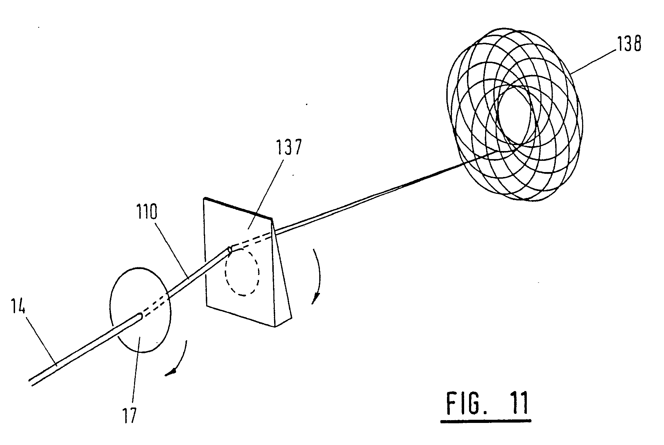

In Figure 2, 11 is a coherent laser generator, for example, provided by a semiconductor laser, or a gas laser device or alternatively provided by the end surface of a light guide for transmitting a coherent beam from outside of the device. A coherent beam 12 emitted from the coherent laser generator 11 is converted into a plane wave 14 by a lens system 13 and vertically enters an area 19 deviated or spaced from the centre of rotation 18 of a hologram 17 passing through a hole 16 in a fixed Fresnel lens 15. As illustrated in Figure 3, the hologram 17 is obtained through interference between a coherent plane wave 123 and a spherical wave 124 on a sensitive material 125, and the first order diffracted beam 110 of the beam entering the hologram 17 is focused to a point 112 through a transparent readout window 111. The hologram 17 is settled or fitted to a shaft 115 which is directly connected to a motor 114 and rotates in the direction indicated by an arrow in Figure 2. As a result, the focusing point 112 of the first order diffracted beam 110 of the hologram 17 scans a circular locus 113 indicated by a broken line in Figure 2. When there is a bar-code symbol BCS on the circular locus 113, a reflected scattering beam 116 passes through the transparent readout window 111 and hologram 17 and is converted to a wave 117 which is substantially parallel to the axis of rotation 115 of the hologram 17 and then enters the Fresnel lens 15. The focal point 118 of Fresnel lens 15 is previously set to an area spaced a little apart from the axis of rotation 115 of the hologram. A wave 119 converged by this Fresnel lens 15 is focused onto an effective detecting surface 121 of an optical detector 120 spaced apart from the axis of rotation and thereby the bar-code symbol BCS information is converted to electrical amplitude information which changes with time. These optical and electrical parts are accommodated in the case 4 on a functional basis as shown in the Figure with such a shape and weight that the device can be carried in the hand.

Such a structure can be obtained in a similar way using optical lenses other than the Fresnel lens 15.

Here, for the hologram 17, there may alternatively be used a diffraction grating provided by means of mechanical ruling, or a computer hologram depicted by calculating a distribution of interference fringes using a computer and not by interference of a coherent laser beam. A diffraction grating provided by means of a computer hologram or mechanical ruling may also be used.

Moreover, a semiconductor element, photomal or photomultiplier may be used as the optical detector 120. An optical fibre may be used, for example, to guide a detected beam to an optical detector provided outside of the device.

According to an embodiment of the present invention a portable information readout device which can be carried by hand can be realised with a simple structure.

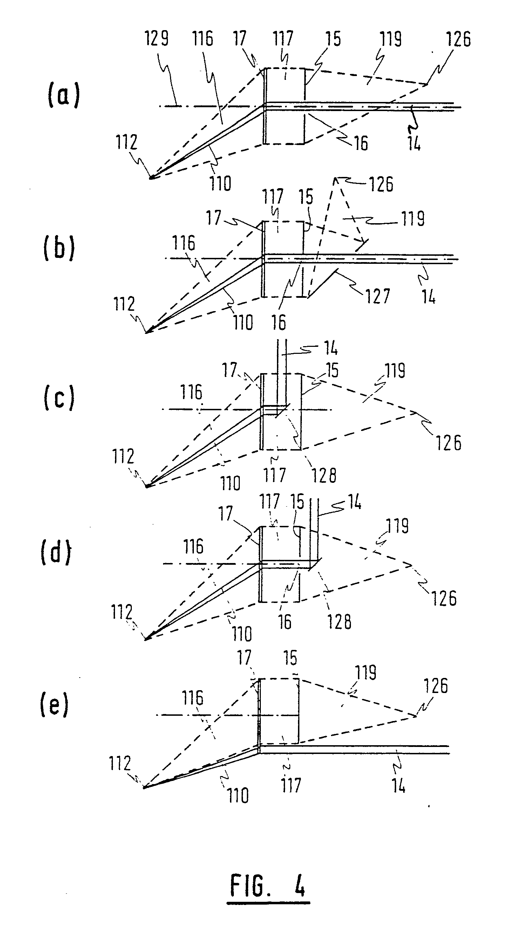

In Figure 4, (a) to (e) show modifications with reference to the optical system of Figure 2. In each of (a) to (e), 14 is a coherent plane wave for reproducing a hologram; 15 is a Fresnel lens; 16 is a hole at the centre of the Fresnel lens (not required in (e)); 17 is the hologram; 110 is the first order diffracted beam from the hologram; 112 is the laser beam focusing point; 116 is a signal beam reflected and scatter from a BCS for example; 117 is the reflected wave rediffracted by the hologram from the signal beam; 119 is the signal beam focused by the lens 15; and 126 is the image reforming point of the signal beam. (a) is different from the embodiment of Figure 2 in that the laser beam 14 enters the rotation centre of hologram 17 and has an advantage in that the hologram does not easily suffer the effects of fluctuation due to aberrations, because the same portion (of the hologram) is always used. (b) has a structure such that a mirror 127 having a pin-hole through which the laser beam 14 for reproduction of hologram 17 passes is provided between the lens 15 and the image reforming point 126, and the centre (optical axis) of the lens 15 matches the axis of rotation of the hologram. Therefore, the degrees of freedom available in designing are increased since the Fresnel lens 15 may be fixed or may be rotatable together with the hologram 17. On the other hand, since the centre of the reformed image due to the increase of readout depth does not change, the laser beam intensity also changes very little on the light detector. (c), (d) and (e) are other structural examples having the same advantage as (b).

The hologram may be changed with the Fresnel lens at the laser beam focusing portion.

The positions of the hologram and the Fresnel lens may be interchanged.

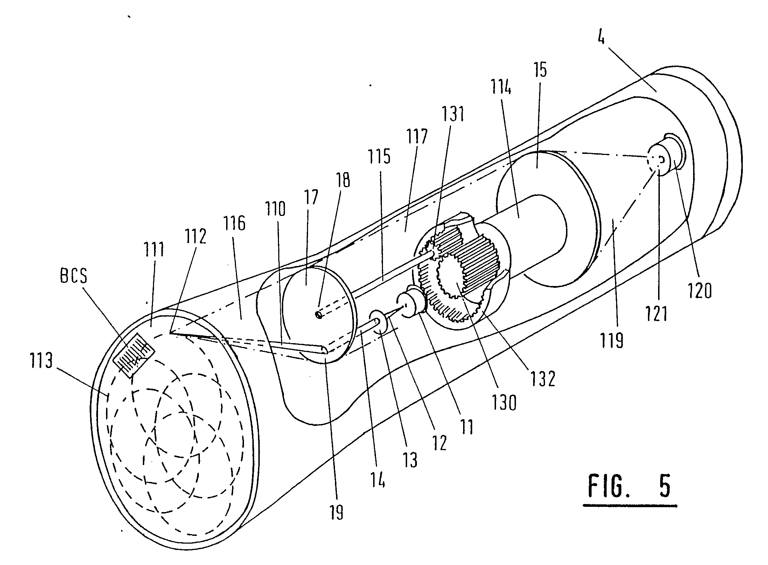

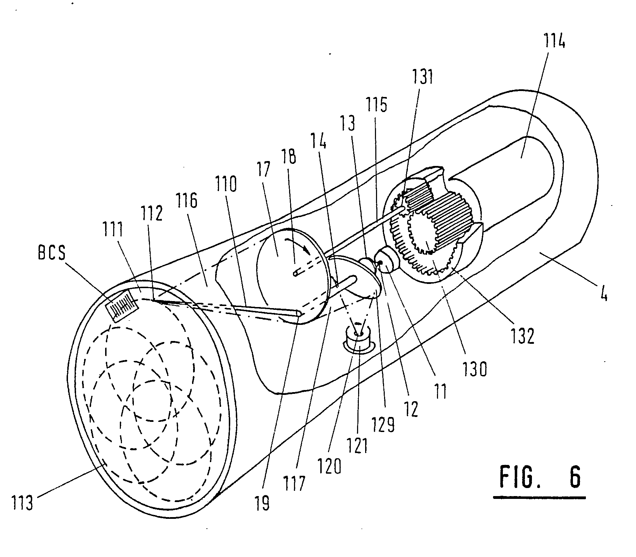

Figure 5 and Figure 6 illustrate modifications of the embodiment shown in Figure 2. In Figures 5 and 6, the hologram 17 is directly coupled to a gear 131 and thereby the axis of rotation of hologram 17 is rotated by means of a gear 130 directly connected to a motor 114 and an external gear 132. Such a structure results in an advantage in that since the centre of a circular scanning pattern 113 moves sequentially resulting in patterns 113 generally as indicated by broken lines in the Figures, restrictions on bar-code symbol BCS setting position are reduced as compared with those attached to a structure providing for only one circular scanning pattern as in the case of the embodiment shown in Figure 2. The structure of Figure 6 is different from Figure 5 in that the laser beam 117, which has been focused by the hologram 17, reflected and converted again to a parallel beam flux by the hologram 17, is focused on optical detector 120 by a reflective optical system (not Fresnel lens 15) having a beam focusing effect, for example, by a concave mirror 129. This structure has the effect of raising laser beam gathering efficiency.

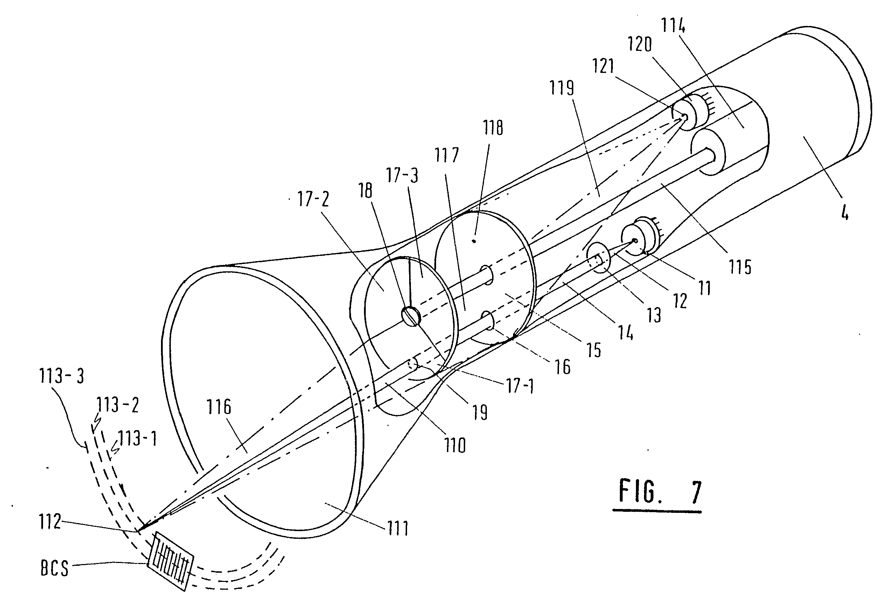

Figure 7 is another modification of Figure 2. The difference from Figure 2 is found in the hologram. For example, as indicated in Figure 7, the hologram disk is divided into three sections 17-1, 17-2 and 17-3. The hologram sections are formed in such a way as to generate respective scanning arcs of which the scanning locations are spaced apart by small amounts as indicated by broken lines 113-1, 113-2, and 113-3 in Figure 7.

Of course, the scanning lines provided by the hologram sections can naturally be made such as to draw the same locus (i.e. such that the scanning locations coincide). In this case, the repetition period of line scanning is 1/3 of the repetition period when the number of revolutions of the hologram is constant (1/3 the repetition rate of Figure 2) and therefore readout rate can be improved.

The number of divisions of the hologram can be selected freely, it may be two or more.

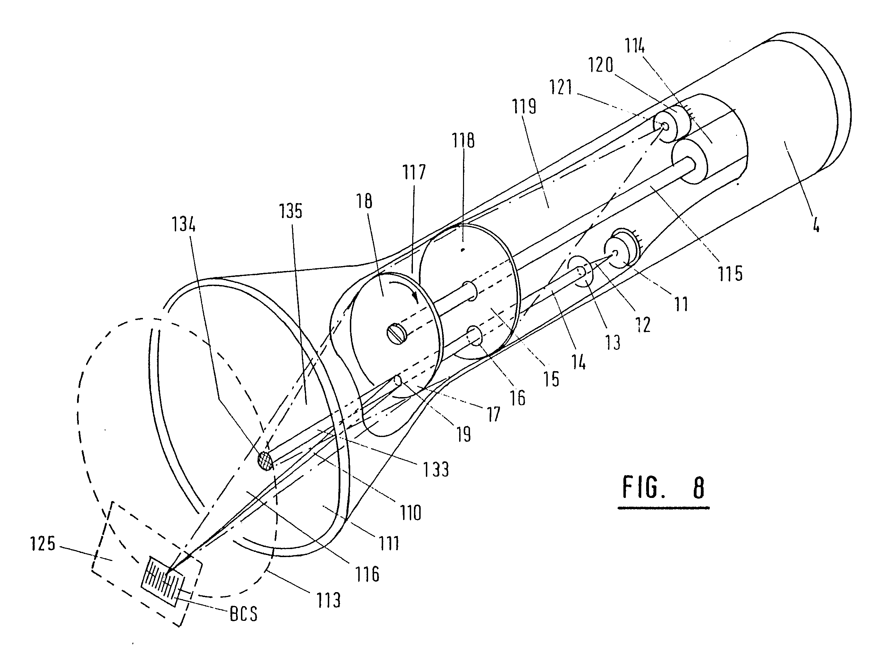

Figure 8 shows another embodiment of the present invention effective for stabilizing S/N (the signal-to-noise ratio) of a readout signal. In the Figure, the hologram 17 is a kind of diffraction grating and a generally non-diffracted beam (zero order beam) 133 is generated in addition to the information readout beam (first order beam) 110. This beam is absorbed by beam absorbing material 134 which is settled or fixed to the readout window 111.

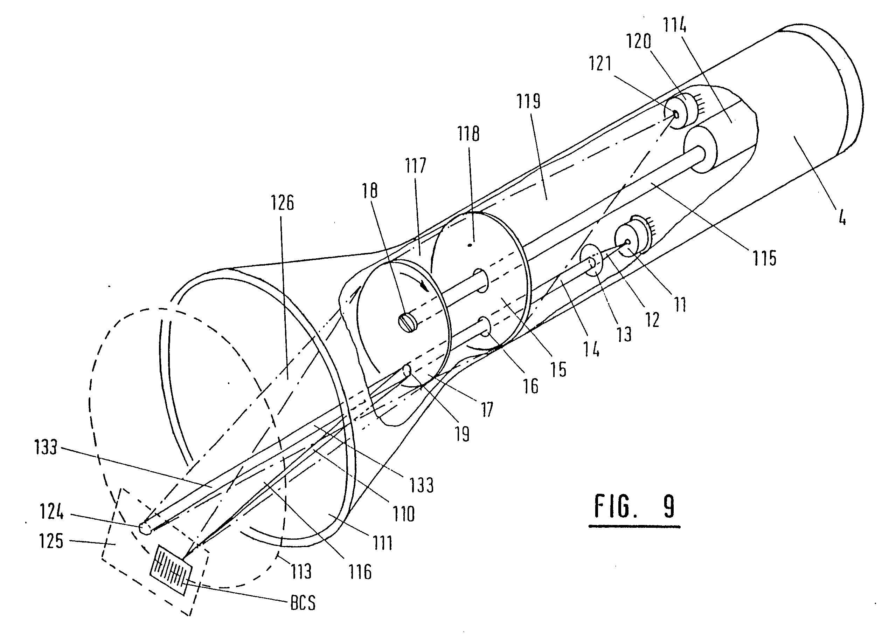

Figure 9 shows a structure similar to that of Figure 8, but in which the beam absorbing material used in Figure 8 is not provided. Namely, the zero order beam 133 emitted from the hologram passes through the readout window to be reflected by the surface on a product 125 other than the bar-code symbol BCS on the product. This noisy beam might in some cases reach the optical detector 120, as a stray beam, via the hologram 17 and the Fresnel lens 15. In such a case, the signal beam 12 suffers from low frequency bias noise, reducing signal accuracy. Therefore, as indicated with reference to the embodiment of Figure 8, an information readout device provided with beam absorbing material which eliminates a zero order beam is suitable for readout of data on products having a gloss surface.

Figure 10 shows another beam absorbing structure arrangement for employment in an embodiment of this invention. A reflection mirror 136 is provided at the readout window 111 and the beam absorbing material 134 is provided along the reflected beam path. In such a case, only that part of beam 133 reflected by the reflection mirror 136 and providing a beam 135 after reflection by the beam absorbing material 134 advances towards the hologram and as a result the level of noise is far reduced.

Figure 11, Figure 12 and Figure 13 illustrate respective further means, employed in respective embodiments of the present invention, providing for generation of eccentric type circular scanning patterns as generally indicated in Figure 5 and Figure 6. In each of Figures 11 to 13, an optical system which deflects a circular scanning pattern is provided between a hologram and an information readout area.

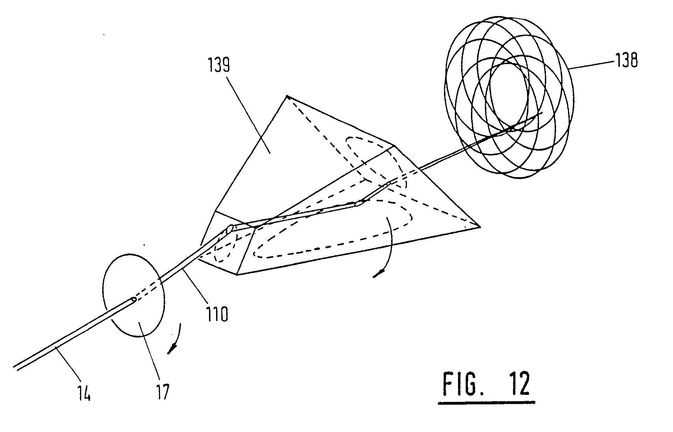

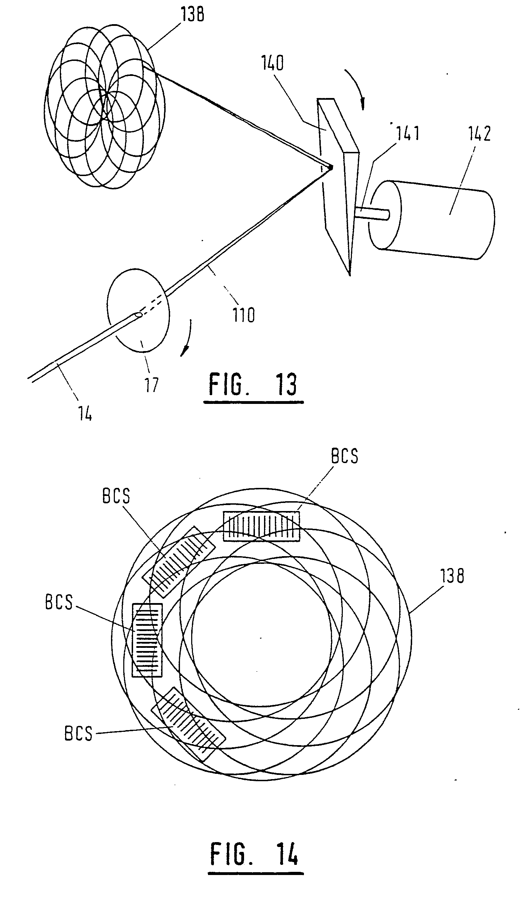

Namely, in Figure 11, a rotating prism 137 (a triangular prism) is used and the prism is rotated at a rate of revolution different from that at which hologram 17 is rotated. Thereby, an eccentric type circular scanning pattern 138 is obtained. In Figure 12, a rotating Dove prism 139 is used in place of a rotating prism. By providing a deviation between the incident beam axis and the outgoing beam axis of the Dove prism 139, an eccentric type circular scanning pattern 138 can be obtained. Moreover, in Figure 13, a rotating mirror 140 is used in place of a rotating prism. The flat mirror 140 is mounted with a specified inclination angle relative to the axis of rotation 141 of a motor 142 which drives the rotation of the mirror. Figure 13 has an advantage in that no aberration is generated in the scanning beam because only a reflected beam is used.

Figure 14 illustrates positional relationships between an eccentric type circular scanning pattern 138 and bar-code symbols BCS. As will be understood from the Figure, there is no need for an operator to attempt positioning of a bar-code symbol by relative rotation of the readout device and the bar-code symbol BCS since the eccentric type circular scanning pattern can provide for reading of the bar-code symbol BCS however it is oriented, and thereby excellent readout operationability can be provided.

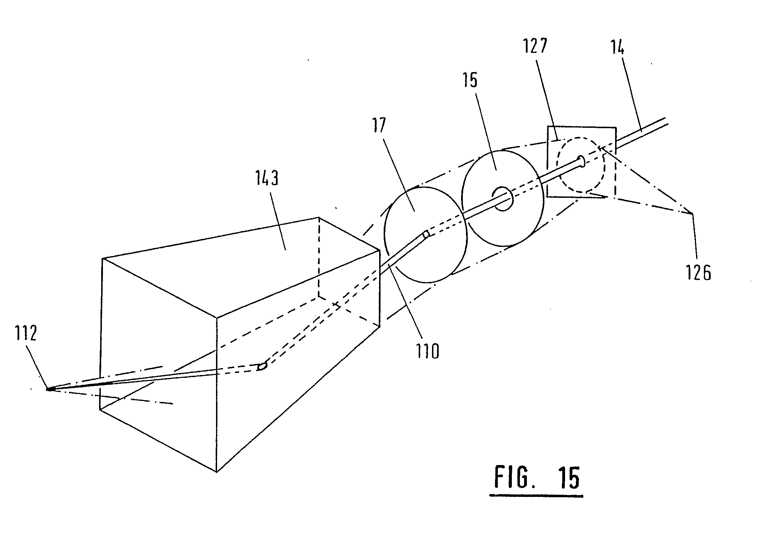

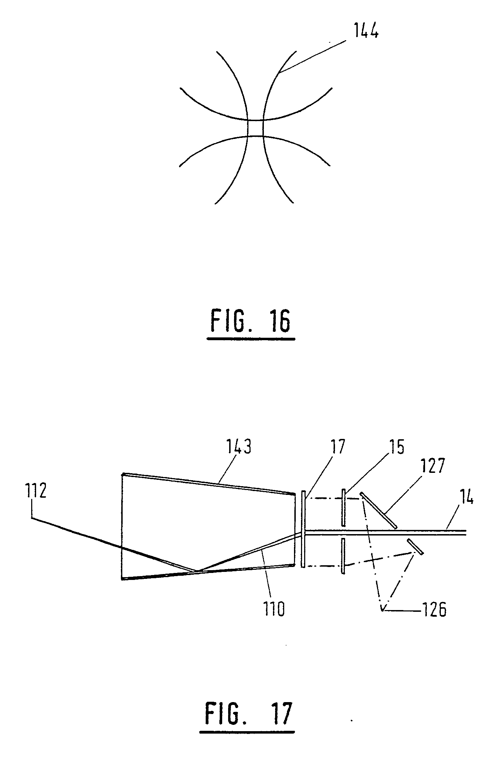

Figures 15 to 17 illustrate another embodiment of the present invention. This embodiment utilizes a rotating mirror tunnel 143. The mirror tunnel 143 is provided between an information readout area and the hologram 17 and rotates at a rate of revolution different from the rate of revolution of the hologram. When the hologram 17 rotates at a rate of revolution higher than that of the mirror tunnel 143, a cross-like scanning pattern 144 as indicated in Figure 16 can be obtained, which pattern rotates as the mirror tunnel 143 rotates. In this case, laser beam focusing point 112 scans an information readout area in detail and thereby a truncated bar-code symbol BCS can be read in any direction by providing a deviation between the axes of rotation of the hologram 17 and the mirror tunnel 143, or by providing slightly different angles for the four surfaces of the mirror tunnel for the rotating axis (with respect to the axis of rotation), or by combining them (by combining the two possibilities).

The mirror tunnel is for example provided by a polyhedral-angle mirror having internal surfaces of a beam reflecting material. The axes of rotation of the hologram and the mirror tunnel may be slightly deviated or offset. The surfaces of the polyhedral-angle mirror may be arranged and combined with slightly different angles of inclination to the axis of rotation of the mirror.

Figure 17 is a side view of the structure shown in Figure 15.

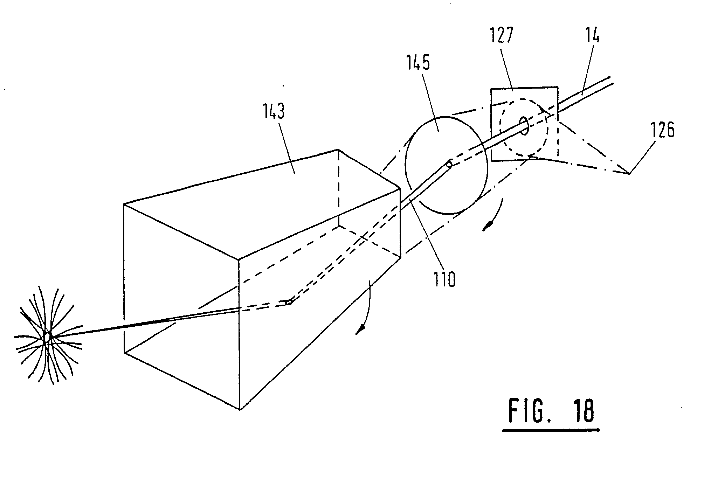

Figure 18 illustrates another embodiment of this invention using a mirror tunnel. The difference between Figures 17 and 18 is that the hologram used in Figure 18 is a self-focusing hologram 145 (no Fresnel lens needed). In the structure of Figure 18, the optical system whereby a laser beam coming via the hologram 145 is self-focused to an image reforming point 126 by means of the beam focusing nature of the hologram offers a large degree of simplification.

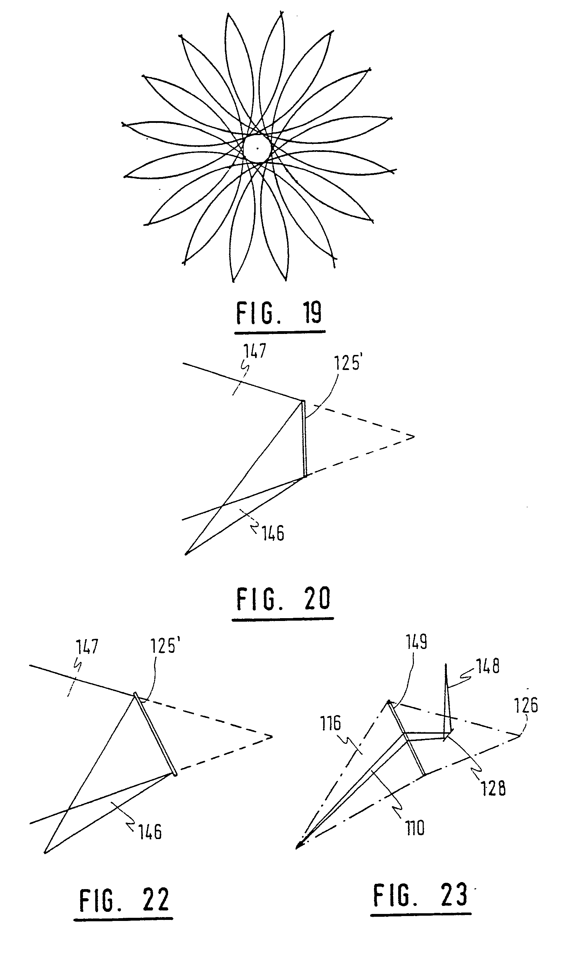

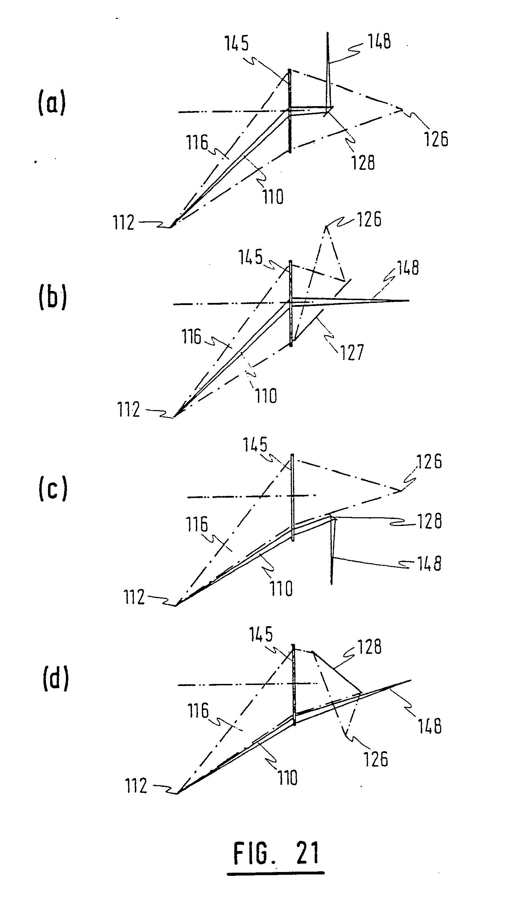

Figure 19 shows an example of the scanning pattern obtained by the employment of a rotating mirror tunnel in an embodiment of this invention.

Figure 20 illustrates the making of a self-focusing type hologram 145 as used in Figure 18. The hologram can be obtained by interference between a divergent spherical wave 146 and a convergent spherical wave 147 on sensitive material 125′ of the hologram.

In Figure 21, (a) to (d) illustrate means of reproducing a hologram 145 thus obtained. In each case the hologram is capable of providing a diffracted beam 110 from a spherical wave 148. In each case laser beam 116 reflected from a bar-code symbol BCS placed in the vicinity of the convergent point 112 of the diffracted beam 110 is focused to image reforming point 126 by the hologram 145.

Figure 22 illustrates the making of a self-focusing hologram by means alternative to those of Figure 20. In Figure 22, the hologram sensitive material 125′ is arranged at some inclination to the beam axis of a convergent spherical wave 147. Thereby an advantage is obtained in that the interference fringe 148 of hologram is formed in the thickness direction of the hologram and is least influenced by the elongation and compression of hologram material in the thickness direction.

Figure 23 illustrates means of reproducing a hologram 149, made as indicated in Figure 22, when applied in an embodiment of this invention.

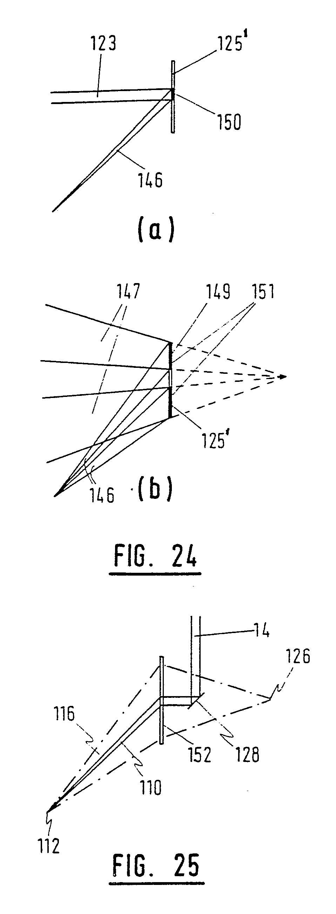

In Figure 24, (a) and (b) illustrate a modification of the self-focused type hologram shown in Figure 20. Namely, the same laser beam 146 is used for making a hologram area 150 for scanning and a hologram area 151 for focusing, and the reference beams 123 and 124 (147) should have different wave forms (e.g. plane and spherical). Naturally, when the laser beam 146 employed is the same, combinations of reference beams can be selected freely.

Figure 25 illustrates the use of a divided self-focusing type hologram 152 in an embodiment of this invention.

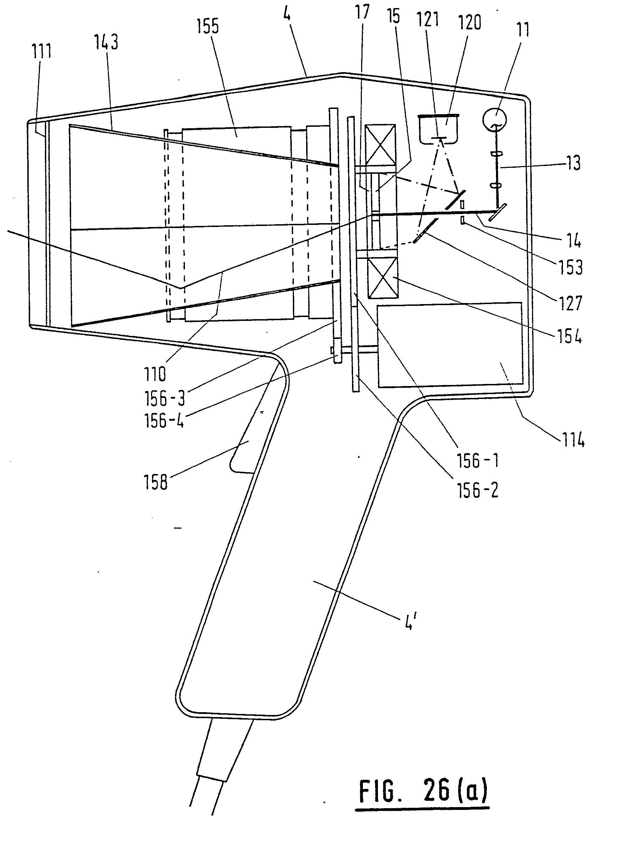

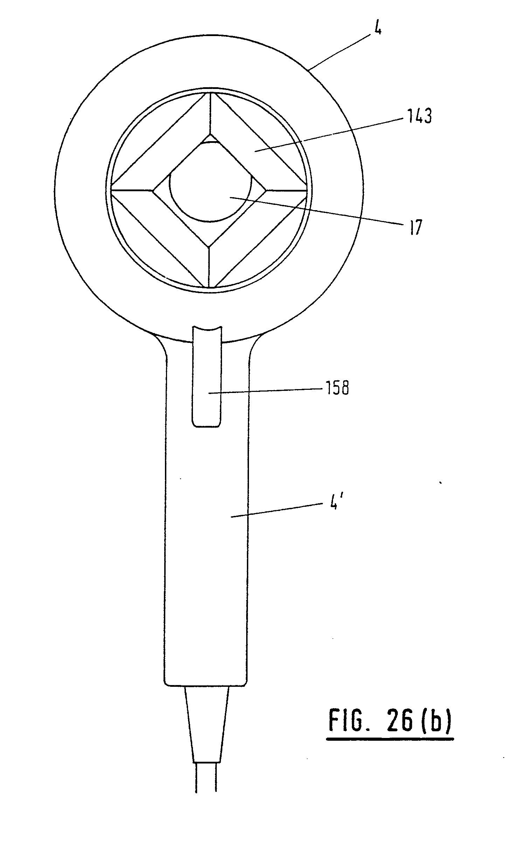

Figure 26 (a) and 26 (b) are a generally sectional side view, and an end-on view of a practical example of an actual device according to the embodiment shown in Figure 15. The optical system of the device is compactly housed within case 4 and thus an operator can perform information readout operations by holding grip part 4′, which is a part of the case 4, in his hand.

A switch 158 is provided on the grip portion 4′ so that the laser beam can be generated only when readout operation is required and thereby normal readout operation can be performed. It is of course possible to form the case 4 cylindrically as represented in Figure 2 and use a cylindrical case part as a grip portion. 153 is a collimator. 154, 155 and 156-1 to 156-4 are parts associated with rotation of mirror tunnel 143 and hologram 17.

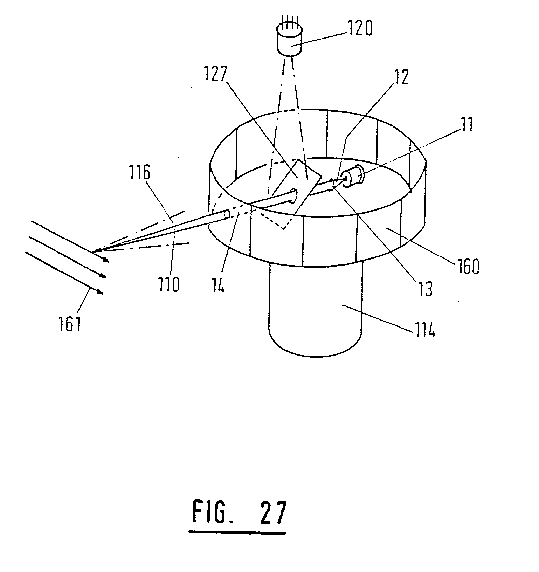

Figure 27 illustrates an example of an optical system for an embodiment of this invention, which generates a pattern 161 for deflecting and scanning at least two areas for bar-code symbols developed in two directions using a drum type hologram scanner 160.

In the embodiments of the present invention described above a coherent beam has been used, from a laser beam source, but similar structures can be formed by using an incoherent beam, from a light emitting diode, CRT, fluorescent lamp or tungsten lamp etc.

A variety of embodiments of the present invention have been described and explained above, and an embodiment of the present invention can provide an information readout device which has a simple structure is of low cost and which, moreover, is compact and has a very high readout efficiency.

An embodiment of the present invention provides a beam scanning, type information readout device, more particularly a hand-held type beam scanning type information readout device which can read information to be read which consists of, for example, a bar-code symbol given to a product.

In general, devices for reading information consisting of bar-code symbols are of either the handy scan type, using a light-pen, or the stationary type self-scan type. The former has a low readout accuracy but is very economical and operated easily, while the latter is very expensive and places limits on operations, but assures a high readout accuracy.

In order to realize a beam scan type information readout device having the advantages of both types mentioned above, namely low cost, simple operation, great utility and high readout accuracy, an embodiment of the present invention provides a beam scanning type information readout device comprising;

a laser beam generator;

an optical beam scanner which deflects and scans plural beams generated from said laser beam generator or deflects and scans the beam generated from the laser beam generator in plural directions;

an optical beam detector which detects the beam reflected from a bar-code symbol; and

a case which accommodates the elements and also provides a grip portion.

Thus, the present invention provides an information readout device comprising a laser beam generator, an optical scanner which deflects the laser beam generated from the laser beam generator and scans at least two areas the bar-code symbols developed at least two dimensions, an optical detector which detects the beam reflected from the bar-code symbol and a case which accommodates the laser beam generator, optical scanner and optical detector, and a grip portion.

And the present invention provides an information readout device comprising a laser beam generator, an optical scanner which deflects a beam generated from the laser beam generator and scans at least in two dimensions the bar-code symbol developed at least two direction, an optical detector which detects the beam reflected from the bar-code-symbol and a case which accommodates the laser beam generator, optical scanner and optical detector, and a grip portion.

**Claims**

1. A hand-held information readout device, having an optical scanner (2—Fig. 1) operable to output a scanning output beam (110—Figs. 2, 4, 5, 6, 7, 8, 9, 11, 12, 13, 15, 17, 18, 21, 23, 25, 26(a), 27) for reading information, for example presented in a bar-code (BCS—Figs. 1, 2, 5, 6, 7, 8, 9, 14) format, from an information readout area where readout information is recorded, comprising an optical beam source (1—Fig. 1; 11—Figs. 2, 5, 6, 7, 8, 9, 26(a), 27), deflector means (2—Fig. 1; 17— Figs. 2, 4, 5, 6, 7, 8, 9, 11, 12, 13, 15, 17, 26(a), 26(b); 15, 17—Figs. 2, 4, 5, 7, 8, 9, 15, 17, 26(a); 17, 129—Fig. 6; 17, 137—Fig. 11; 17, 139—Fig. 12; 17, 140—Fig. 13; 15, 17, 143—Figs. 15, 17; 143, 145—Fig. 18; 145—Fig. 21; 149—Fig. 23; 152— Fig. 25) operable to deflect the optical beam (12, 14—Figs. 2, 4, 5 to 9, 11, 12, 13, 15, 17, 18, 25, 26(a), 27) from the beam source (1; 11) to provide the scanning output beam (110), a detector (3— Fig. 1; 120—Figs. 2, 5 to 9, 16(a), 27) input for receiving light of the scanning output beam (110) reflected from the information readout area, and having a housing (4—Figs. 1, 2, 5 to 9, 26(a), 26(b)) accommodating the beam source (1; 11), the deflector means (2—Fig. 1; 17—Figs. 2, 4, 5, 6, 7, 8, 9, 11, 12, 13, 15, 17, 26(a), 26(b); 15, 17—Figs. 2, 4, 5, 7, 8, 9, 15, 17, 26(a); 17, 129—Figs. 6; 17, 137—Fig. 11; 17, 139—Fig. 12; 17, 140—Fig. 13; 15, 17, 143—Figs. 15, 17; 143, 145—Fig. 18; 145—Fig. 21; 149—Fig. 23; 152—Fig. 25) and the detector input, and having a hand grip (4'—Figs. 1, 26(a), 26(b))

characterised in that the deflector means (2— Fig. 1; 17—Figs. 2, 4, 5, 6, 7, 8, 9, 11, 12, 13, 15, 17, 26(a), 26(b); 15, 17—Figs. 2, 4, 5, 7, 8, 9, 15, 17, 26(a); 17, 129—Fig. 6; 17, 137—Fig. 11; 17, 139—Fig. 12; 17, 140—Fig. 13; 15, 17, 143—Figs. 15, 17; 143, 145—Fig. 18; 145—Fig. 21; 149—Fig. 23; 152—Fig. 25) are operable not only to deflect but also to transmit the optical beam (12, 14) from the beam source (1; 11) to provide the scanning output beam (110) and are operable also to transmit and to converge the output beam (116, 119—Figs. 2, 4, 5 to 9, 23, 21, 25, 27) reflected from the information readout area, for focusing for receipt by the detector input.

2. A device as claimed in claim 1, wherein the housing (4) accommodates a beam generator (11—Figs. 2, 5 to 9, 26(a), 27) which provides the optical beam source.

3. A device as claimed in claim 1, wherein an output end of an optical fibre is accommodated within the housing (4) to provide the optical beam source (1), and input end of the fibre being external of the housing (4) and connected or connectable to a beam generator.

4. A device as claimed in claim 2 or 3, wherein the beam generator (11) is a semiconductor laser.

5. A device as claimed in any preceding claim, wherein the housing (4) accommodates an optical detector (3—Fig. 1; 120—Figs. 2, 5 to 9, 26(a), 27), for detecting light (116; 119) of the scanning output beam (110) after reflection from information to be read, having the said detector input.

6. A device as claimed in any one of claims 1 to 4 wherein the detector input is an input end of an optical fibre which is accommodated within the housing (4) for receiving light of the scanning output beam (110) after reflection from the information readout area, an output end of the fibre being external of the housing (4) and connected or connectable to an optical detector.

7. A device as claimed in claim 5 or 6, wherein the optical detector (3; 120) is a semiconductor device or a photomal or a photomultiplier.

8. A device as claimed in any one of claims 1 to 7, wherein the optical scanner (2) is so structured as to generate a circular scanning pattern (113— Figs. 2, 5 to 6, 8, 9).

9. A device as claimed in any one of claims 1 to 7, wherein the optical scanner (2) is so structured as to generate an arc scanning pattern (113-1, 113-2, 113-3—Fig. 7; 144—Fig. 16).

10. A device as claimed in any one of claims 1 to 7, wherein the optical scanner (2) is so structured as to generate a circular scanning pattern (113— Fig. 6; 138—Figs. 11, 12, 13, 14) having a plurality of centres (e.g. a pattern provided by circular motion around a point which point is itself in motion).

11. A device as claimed in any one of claims 8 to 10, wherein the deflector means comprises a hologram (17—Figs. 2, 5 to 9, 11, 12, 13, 15, 17, 26(a); 145—Fig. 18) and a rotation drive source (114—Figs. 2, 5 to 9, 26(a)) for rotating the hologram.

12. A device as claimed in any one of claims 8 to 10, wherein the deflector means comprises a lens and a rotation drive source for rotating the lens, for example about an axis different from the optical axis of the lens.

13. A device as claimed in claim 10, or claim 11 or 12 read as appended to claim 10, wherein the deflector means further comprises either a triangular prism (137—Fig. 11) or Dove prism (139— Fig. 12) or a reflection mirror (140—Fig. 13), and a rotation drive source (141, 142—Fig. 13) for rotating the triangular prism (137), or for rotating the Dove prism (139), or for rotating the reflection mirror (140) around an axis inclined with respect to the reflection surface of the reflection mirror, to provide the scanning pattern (138).

14. A device as claimed in claim 9, or claim 11 or 12 read as appended to claim 9, wherein the deflector means further comprises a polyhedral-angle mirror (143—Figs. 15, 17, 18, 26(a)) internal surfaces of which are of a beam reflection material, for generating the scanning pattern (144—Fig. 16), for example the polyhedral-angle mirror being rotated when the device is in use.

15. A device as claimed in claim 14 when read as appended to claim 11 or 12, wherein the axis of rotation of the hologram (17; 145), or the axis of rotation of the lens, as the case may be, is arranged so as to be slightly offset from the axis of rotation of the polyhedral angle mirror (143).

16. A device as claimed in claim 14 or 15, wherein the internal surfaces of the polyhedral-angle mirror (143) have different angles of inclination with respect to the axis of rotation of the polyhedral-angle mirror.

17. A device as claimed in any one of claims 1 to 7, wherein the deflector means comprises either a hologram (17—Figs. 2, 4, 5 to 9, 11, 12, 13, 15, 17; 145—Figs. 18, 21; 149—Fig. 23; 152—Fig. 25) or an optical lens.

18. A device as claimed in claim 17, read as appended to claim 5, 6 or 7, wherein the scanning output beam reflected from the information readout area passes to the hologram, or to the optical lens, as the case may be, and is then guided to the optical detector (3; 120), or to the input end of the optical fibre accommodated within the housing, via the hologram or the optical lens.

19. A device as claimed in claim 18, wherein a convergence lens (15—Figs. 2, 4, 5 to 9, 15, 17; 26(a)) is provided between the hologram (17) and the optical detector (3; 120) or the input end of the optical fibre accommodated within the housing (4), or is provided between the said optical lens and the optical detector (3; 120) or the input end of the optical fibre accommodated within the housing (4).

20. A device as claimed in claim 18, which device employs an hologram (145—Figs. 18, 21; 149—Fig. 23; 152—Fig. 25) itself functioning as a convergence lens for the scanning output beam reflected from the information readout area.

21. A device as claimed in any one of claims 1 to 7, wherein the deflector means comprises a diffraction grating, for example provided either by mechanical ruling or by a computer hologram.

**Revendications**

1. Dispositif de lecture d'informations à main comprenant un analyseur optique (2—figure 1) agissant pour fournir un faisceau de sortie de balayage (110—figures 2, 4, 5, 6, 7, 8, 9, 11, 12, 13, 15, 17, 18, 21, 23, 25, 26 (a), 27) pour lire des informations, présentées par exemple dans un format de codesbarres (BCS—figures 1, 2, 5, 6, 7, 8, 9, 14), à partir d'une zone de lecture d'informations où les informations à lire sont enregistrées, comprenant une source de faisceau optique (1—figure 1; 11—figures 2, 5, 6, 7, 8, 9, 26 (a), 27), un moyen déflecteur (2—figure 1; 17—figures 2, 4, 5, 6, 7, 8, 9, 11, 12, 13, 15, 17, 26 (a), 26 (b)); 15, 17—figures 2, 4, 5, 7, 8, 9, 15, 17, 26 (a); 17, 129—figure 6; 17, 137—figure 11; 17, 139—figure 12; 17, 140—figure 13; 15, 17, 143—figures 15, 17; 143, 145—figure 18; 145—figure 21; 149—figure 23; 152—figure 25), agissant pour défléchir le faisceau optique (12, 14—figures 2, 4, 5 à 9, 11, 12, 13, 15, 17, 18, 25, 26 (a), 27) en provenance de la source de faisceau (1; 11) pour fournir le faisceau de sortie de balayage (110), une entrée de détecteur (3—figure 1; 120—figures 2, 5 à 9, 26 (a), 27) pour recevoir la lumière du faisceau de sortie de balayage (110) réfléchie à partir de la zone de lecture d'informations et comprenant un boîtier (4—figures 1, 2, 5 à 9, 26 (a), 26 (b)) contenant la source de faisceau (1; 11), le moyen déflecteur (2—figure 1; 17—figures 2, 4, 5, 6, 7, 8, 9, 11, 12, 13, 15, 17, 26 (a), 26 (b); 15, 17—figures 2, 4, 5, 7, 8, 9, 15, 17, 26 (a); 17, 129—figure 6; 17, 137—figure 11; 17, 139—figure 12; 17, 140—figure 13; 15, 17, 143—figures 15, 17; 143, 145—figure 18; 145—figure 21; 149—figure 23; 152—figure 25) et l'entrée de détecteur, et comprenant une poignée (4'—figures 1, 26 (a), 26 (b)), caractérisé en ce que le moyen déflecteur (2—figure 1; 17—figures 2, 4, 5, 6, 7, 8, 9, 11, 12, 13, 15, 17, 26 (a), 26 (b); 15, 17—figures 2, 4, 5, 7, 8, 9, 15, 17, 26 (a); 17, 129—figure 6; 17, 137—figure 11; 17, 139—figure 12; 17, 140—figure 13; 15, 17, 143—figures 15, 17; 143, 145—figure 18; 145—figure 21; 149—figure 23; 152—figure 25) agit non seulement pour défléchir mais également pour transmettre le faisceau optique (12, 14) en provenance de la source de faisceau (1; 11) pour fournir le faisceau de sortie de balayage (110) et agit également pour transmettre et faire converger le faisceau de sortie (116, 119—figures 2, 4, 5 à 9, 23, 21, 25, 27) réfléchi à partie de la zone de lecture d'informations pour effectuer une focalisation pour réception par l'entrée de détecteur.

2. Dispositif selon la revendication 1, caractérisé en ce que le boîtier (4) contient un générateur de faisceau (11—figures 2, 5 à 9, 26 (a), 27) qui constitue la source de faisceau optique.

3. Dispositif selon la revendication 1, caractérisé en ce qu'une extrémité de sortie d'une fibre optique est contenue dans le boîtier (4) pour fournir la source de faisceau optique (1), l'extrémité d'entrée de la fibre étant externe au boîtier (4) et connectée ou connectable à une générateur de faisceau.

4. Dispositif selon une des revendications 2 ou 3, caractérisé en ce que le générateur de faisceau (11) est un laser à semiconducteur.

5. Dispositif selon l'une quelconque des revendications précédentes, caractérisé en ce que le boîtier (4) contient un détecteur optique (3—figure 1; 120—figures 2, 5 à 9, 26 (a), 27), pour détecter la lumière (116; 119) du faisceau de sortie de balayage (110) après réflexion à partir de l'information à lire, comprenant ladite entrée de détecteur.

6. Dispositif selon l'une quelconque des revendications 1 à 4, caractérisé en ce que l'entrée de détecteur est une extrémité d'entrée d'une fibre optique qui est contenue dans le boîtier (4) pour recevoir de la lumière du faisceau de sortie de balayage (110) après réflexion à partir de la zone de lecture d'informations, une extrémité de sortie de la fibre étant externe au boîtier (4) et connectée ou connectable à un détecteur optique.

7. Dispositif selon l'une des revendications 5 ou 6, caractérisé en ce que le détecteur optique (3; 120) est un dispositif à semiconducteur ou un compteur de photons ou un photomultiplicateur.

8. Dispositif selon l'une quelconque des revendications 1 à 7, caractérisé en ce que l'analyseur optique (2) est constitué de façon à produire un motif de balayage circulaire (113—figures 2, 5 à 6, 8, 9).

9. Dispositif selon l'une quelconque des revendications 1 à 7, caractérisé en ce que l'analyseur optique (2) est constitué pour produire un motif de balayage en arcs de cercle (113-1, 113-2, 113-3—figure 7; 144—figure 16).

10. Dispositif selon l'une quelconque des revendications 1 à 7, caractérisé en ce que l'analyseur optique (2) est constitué pour produire un motif de balayage circulaire (113—figure 6; 138— figures 11, 12, 13, 14) ayant plusieurs centres (par exemple un motif assuré par déplacement circulaire autour d'un point, ce point étant lui-même en déplacement).

11. Dispositif selon l'une quelconque des revendications 8 à 10, caractérisé en ce que le moyen déflecteur comprend un hologramme (17— figures 2, 5 à 9, 11, 12, 13, 15, 17, 26 (a); 145—figure 18) et une source d'entraînement en rotation (114—figures 2, 5 à 9, 26 (a)) pour faire tourner l'hologramme.

12. Dispositif selon l'une quelconque des revendications 8 à 10, caractérisé en ce que le moyen déflecteur comprend une lentille et une source d'entraînement en rotation pour faire tourner la lentille, par exemple autour d'un axe différent de l'axe optique de la lentille.

13. Dispositif selon la revendication 10, ou la revendication 11 ou 12 lues en dépendance par rapport à la revendication 10, caractérisé en ce que le moyen déflecteur comprend en outre, ou bien un prisme triangulaire (137—figure 11), ou bien un prisme basculant (139—figure 12), ou bien un miroir réflecteur (140—figure 13), et une source d'entraînement en rotation (141, 142— figure 13) pour faire tourner le prisme triangulaire (137), ou pour faire osciller le prisme basculant (139), ou pour faire tourner le miroir réflecteur (140) autour d'un axe incliné par rapport à la surface de réflexion du miroir réflecteur, pour fournir le motif de balayage (138).

14. Dispositif selon la revendication 9, ou la revendication 11 ou 12 lue en dépendance par rapport à la revendication 9, caractérisé en ce que le moyen déflecteur comprend en outre un miroir à angles polyèdres (143—figures 15, 17, 18, 26 (a)) dont les surfaces internes sont en un matériau réflecteur optique, pour produire le motif de balayage (114—figure 16), le miroir à angles polyèdres, par exemple, étant entraîné en rotation quand le dispositif est en cours d'utilisation.

15. Dispositif selon la revendication 14 lue en dépendance par rapport aux revendications 11 et 12, caractérisé en ce que l'axe de rotation de l'hologramme (17; 145), ou l'axe de rotation de la lentille, selon le cas, est disposé de façon à être légérement décalé de l'axe de rotation du miroir à angles polyèdres (143).

16. Dispositif selon l'une des revendications 14 ou 15, caractérisé en ce que les surfaces internes du miroir à angles polyèdres (143) ont des angles d'inclinaison différents par rapport à l'axe de rotation du miroir à angles polyèdres.

17. Dispositif selon l'une quelconque des revendications 1 à 7, caractérisé en ce que le moyen déflecteur comprend ou bien un hologramme (17—figures 2, 4, 5 à 9, 11, 12, 13, 15, 17; 145—figures 18, 21; 149—figure 23; 152—figure 25) ou bien une lentille optique.

18. Dispositif selon la revendication 17, lue en dépendance par rapport à la revendication 5, 6 ou 7, caractérisé en ce que le faisceau de sortie de balayage réfléchi à partir de la zone de lecture d'informations passe par l'hologramme, ou la lentille optique, selon le cas, et est ensuite guidé vers le détecteur optique (3, 120), ou vers l'extrémité d'entrée de la fibre optique disposée dans le boîtier par l'intermédiaire de l'hologramme ou de la lentille optique.

19. Dispositif selon la revendication 18, caractérisé en ce qu'une lentille convergente (15— figures 2, 4, 5 à 9, 15, 17, 26 (a)) est prévue entre l'hologramme (17) et le détecteur optique (3; 120) ou l'extrémité d'entrée de la fibre optique disposée dans la boîtier (4) ou est prévu entre la lentille optique et le détecteur optique (3, 120) ou l'extrémité d'entrée de la fibre optique disposée dans le boîtier (4).

20. Dispositif selon la revendication 18, caractérisé en ce qu'il utilise un hologramme (145— figures 18, 21; 149—figure 23; 152—figure 25) fonctionnant lui-même comme une lentille convergente pour faire balayer le faisceau de sortie réfléchi à partir de la zone de lecture d'informations.

21. Dispositif selon l'une quelconque des revendications 1 à 7, caractérisé en ce que le moyen déflecteur comprend un réseau de diffraction, obtenu par exemple par traçage mécanique ou par un hologramme obtenu par calculateur.

**Patentansprüche**

1. Hand - Informationsauslesevorrichtung, die einen optischen Abtaster (2—Fig. 1) hat, der einen Abtastausgangsstrahl erzeugen kann (110— Figuren 2, 4, 5, 6, 7, 8, 9, 11, 12, 13, 15, 17, 18, 21, 23, 25, 26(a), 27) zum Lesen von Information, die z. B. in einem Strichcodeformat (BCS—Figuren 1, 2, 5, 6, 7, 8, 9, 14) dargestellt sein kann, von einem Informationslesebereich, wo die zu lesende Information aufgezeichnet ist, mit einer optischen Strahlenquelle (1—Fig. 1; 11—Figuren 2, 5, 6, 7, 8, 9, 26(a), 27), Ablenkeinrichtungen (2—Figur 1; 17—Figuren 2, 4, 5, 6, 7, 8, 9, 11, 12, 13, 15, 17, 26(a), 26(b); 15, 17—Figuren 2, 4, 5, 7, 8, 9, 15, 17, 26(a); 17, 129—Figur 6; 17, 137—Figur 11; 17, 139—Figur 12; 17, 140—Figur 13; 15, 17, 143—

Figuren 15, 17; 145—Figur 18; 145—Figur 21; 149—Figur 23; 152—Figur 25), die betätigt werden können, um den optischen Strahl (12, 14—Figuren 2, 4, 5 bis 9, 11, 12, 13, 15, 17, 18, 25, 26(a), 27) von der Strahlenquelle (1; 11) abzulenken, um den Abtastausgangsstrahl (110) zu liefern, einem Detektor (3—Figur 1; 120—Figuren 2, 5 bis 9, 26(a), 27) Eingang, um Licht von dem Abtastausgangsstrahl (110) zu empfangen, der von dem Informationslesebereich reflektiert wird, und mit einem Gehäuse (4—Figuren 1, 2, 5 bis 9, 26(a), 26(b)), welches die Strahlenquelle (1; 11), die Ablenkeinrichtung (2—Figur 1; 17—Figuren 2, 4, 5, 6, 7, 8, 9, 11, 12, 13, 15, 17, 26(a), 26(b); 15, 17—Figuren 2, 4, 5, 7, 8, 9, 15, 17, 26(a); 17, 129—Figur 6; 17, 137—Figur 11; 17, 139—Figur 12; 17, 140—Figur 13; 15, 17, 143—Figuren 15, 17; 143, 145—Figur 18, 145—Figur 21; 149—Figur 23; 152—Figur 25) und den Detektoreingang aufnimmt, und mit einem Handgriff (4'—Figuren 1, 26(a), 26(b)), dadurch gekennzeichnet, daß die Ablenkeinrichtungen (2—Figur 1; 17—Figuren 2, 4, 5, 6, 7, 8, 9, 11, 12, 13, 15, 17, 26(a), 26(b); 15, 17—Figuren 2, 4, 5, 7, 8, 9, 15, 17, 26(a); 17, 129—Figur 6; 17, 137—Figur 11; 17, 139—Figur 12; 17, 140—Figur 13; 15, 17, 143—Figuren 15, 17; 143, 145—Figur 18; 145—Figur 21; 149—Figur 23; 152—Figur 25) betätigt werden können, um nicht nur abzulenken sondern auch um den optischen Strahl (12, 14) von der Strahlenquelle (1; 11) zu übertragen, um den Abtastausgangsstrahl (110) zu liefern, und auch betätigt werden könne, um auch den Ausgangsstrahl 116, 119—Figuren 2, 4, 5 bis 9, 23, 21, 25, 27), der von dem Informationslesebereich reflektiert wird, zu übertragen und zu konvergieren, zur Fokussierung für den Empfang durch den Detektoreingang.

2. Vorrichtung nach Anspruch 1, bei welcher das Gehäuse (4) einen Strahlengenerator (11—Figuren 2, 5 bis 9, 26(a), 27) umfaßt, welcher die optische Strahlenquelle bildet.

3. Vorrichtung nach Anspruch 1, bei welcher ein Ausgangsende einer optischen Phase innerhalb des Gehäuses (4) aufgenommen ist, um die optische Strahlenquelle (1) zu bilden, und ein Eingangsende der Phase außerhalb des Gehäuses (4) und mit einem Strahlgenerator verbunden oder verbindbar ist.

4. Vorrichtung nach Anspruch 2 oder 3, bei welcher der Strahlengenerator (11) ein Halbleiterlaser ist.

5. Vorrichtung nach einem der vorhergehenden Ansprüche, bei welcher das Gehäuse (4) einen optischen Detektor (3—Fig. 1; 120—Figuren 2, 5 bis 9, 26(a), 27), zum Abtasten von Licht (116; 119) des Abtastausgangsstrahls (110) nach der Reflexion von zu lesender Information enthält, der den genannten Detektoreingang hat.

6. Vorrichtung nach einem der Ansprüche 1 bis 4, bei welcher der Detektoreingang ein Eingangsende einer optischen Faser ist, welche innerhalb des Gehäuses (4) zum Empfang von Licht des Abtastausgangsstrahls (110) nach Reflexion von dem Informationslesebereich aufgenommen ist, wobei ein Ausgangsende der Faser außerhalb des Gehäuses (4) mit einem optischen Detektor verbunden oder verbindbar ist.

7. Vorrichtung nach Anspruch 5 oder 6, bei welcher der optische Detektor (3; 120) eine Halbleitervorrichtung oder ein Photomal oder ein Photomultiplier ist.

8. Vorrichtung nach einem der Ansprüche 1 bis 7, bei welcher der optische Abtaster (2) so konstruiert ist, daß er ein kreisförmiges Abtastmuster (113—Figuren 2, 5 bis 6, 8, 9) erzeugt.

9. Vorrichtung nach einem der Ansprüche 1 bis 7, bei welcher der optische Abtaster so konstruiert ist, daß er ein bogenförmiges Abtastmuster (113-1, 113-2, 113-3—Figur 7; 144—Figur 16) erzeugt.

10. Vorrichtung nach einem der Ansprüche 1 bis 7, bei welcher der optische Abtaster (2) so konstruiert ist, daß er ein kreisförmiges Abtastmuster (113—Fig. 6; 138—Figuren 11, 12, 13, 14) erzeugt, welches eine Vielzahl von Zentren (z. B. ein Muster, welches durch eine kreisförmige Bewegung um einen Punkt gebildet wird, welcher selber in Bewegung ist) hat.

11. Vorrichtung nach einem der Ansprüche 8 bis 10, bei welcher die Ablenkeinrichtung ein Hologramm (17—Figuren 2, 5 bis 9, 11, 12, 13, 15, 17, 26(a); 145—Fig. 18) und eine Rotationsantriebsquelle (114—Figuren 2, 5 bis 9, 26(a)) zum Rotieren des Hologramms umfaßt.

12. Vorrichtung nach einem der Ansprüche 8 bis 10, bei welcher die Ablenkeinrichtungen eine Linse und eine Rotationsantriebsquelle zur Rotation der Linse umfassen, z. B. um eine Achse, die von der optischen Achse der Linse verschieden ist.

13. Vorrichtung nach Anspruch 10 oder nach Anspruch 11 oder 12 in Verbindung mit Anspruch 10, bei welcher die Ablenkeinrichtungen ferner entweder ein dreieckiges Prisma (137—Fig. 11) oder ein Dove-Prisma (139—Fig. 12) oder einen reflektierenden Spiegel (140—Fig. 13), umfassen, und eine Rotationsantriebsquelle (141, 142—Fig. 13), um das dreieckige Prisma (137), das Dove-Prisma (139) oder den Reflexionsspiegel (140) um eine Achse zu rotieren, die gegenüber der Reflexionsfläche des reflektierenden Spiegels geneigt ist, um das Abtastmuster (138) zu erzeugen.

14. Vorrichtung nach Anspruch 9, oder nach Anspruch 11 oder 12 in Verbindung mit Anspruch 9, bei welcher die Ablenkeinrichtungen ferner einen Vielkantwinkelspiegel (143—Figuren 15, 17, 18, 26(a)) umfassen, dessen innere Oberflächen aus einem Strahlen reflektierenden Material bestehen, um das Abtastmuster (144—Fig. 16) zu erzeugen, z. B. einen Vielkantwinkelspiegel, der beim Betrieb der Vorrichtung rotiert wird.

15. Vorrichtung nach Anspruch 14 in Verbindung mit Anspruch 11 oder 12, bei welcher die Rotationsachse des Hologramms (17; 145) oder die Rotationsachse der Linsen, was immer der Fall sein mag, so angeordnet ist, daß sie gegenüber der Rotationsachse des Vielkankwinkelspiegels (143) geringfügig versetzt ist.

16. Vorrichtung nach Anspruch 14 oder 15, bei welcher die inneren Oberflächen des Vielkantwinkelspiegels (143) verschiedene Neigungswinkel gegenüber der Rotationsachse des Vielkantwinkelspiegels aufweisen.

17. Vorrichtung nach einem der Ansprüche 1 bis 7, bei welcher die Ablenkeinrichtungen ferner entweder ein Hologramm (17—Figuren 2, 4, 5 bis 9, 11, 12, 13, 15, 17; 145—Figuren 18, 21; 149—Figur 23; 152—Figur 25) oder eine optische Linse umfassen.

18. Vorrichtung nach Anspruch 17 in Verbindung mit Anspruch 5, 6 oder 7, bei welcher der Abtastausgangsstrahl, der von dem Informationslesebereich reflektiert wird, durch das Hologramm oder durch die optische Linse tritt, was immer der Fall sein mag, und dann zu dem optischen Detektor (3; 120) geführt wird, oder zu dem Eingangsende der optischen Faser, die in dem Gehäuse enthalten ist, über das Hologramm oder die optische Linse.

19. Vorrichtung nach Anspruch 18, bei welcher eine Sammellinse (15—Figuren 2, 4, 5 bis 9, 15, 17, 26(a)) zwischen dem Hologramm (17) und dem optischen Detektor (3; 120) oder dem Eingangsende der optischen Faser, die in dem Gehäuse (4) angeordnet ist, oder zwischen der genannten optischen Linse und dem optischen Detektor (3; 120) oder dem Eingangsende der optischen Faser, die in dem Gehäuse (4) angeordnet ist, vorgesehen ist.

20. Vorrichtung nach Anspruch 18, welche ein Hologramm (145—Figuren 18, 21; 149—Figur 23; 152—Figure 25) verwendet, das selbst als konvergierende Linse für den abtastenden Ausgangsstrahl, der von dem Informationslesebereich reflektiert wird, funktioniert.

21. Vorrichtung nach einem der Ansprüche 1 bis 7, bei welcher die Ablenkeinrichtungen ein Beugungsgitter umfassen, welches z. B. entweder durch eine mechanische Teilung oder durch ein Computerhologramm gebildet ist.

FIG. 1

FIG. 2

123

125

124

## FIG. 3

134

135

133

129

136

111

## FIG. 10

FIG. 4

FIG. 5

0 032 794

FIG. 6

FIG. 7

0 032 794

FIG. 8

0 032 794

FIG. 9

FIG. 11

139

138

110

14

17

# FIG. 12

FIG. 13

FIG. 14

0 032 794

FIG. 15

144

## FIG. 16

143    17    15    127    14

112    110    126

## FIG. 17

FIG. 18

**FIG. 19**

**FIG. 20**

**FIG. 22**

**FIG. 23**

FIG. 21

**0 032 794**

(a)

FIG. 24

(b)

FIG. 25

FIG. 26 (a)

FIG. 26 (b)

FIG. 27